# EUROPEAN PATENT APPLICATION

(11) **EP 0 602 989 A1**
(43) Date of publication of application: **22.06.1994**
(21) Application number: 93310197.4
(22) Date of filing: 16.12.1993
(51) Int. Cl.: B60C 11/04, B60C 11/11, B60C 11/06

(54) **Pneumatic tyre**

(30) Priority: 16.12.1992 JP 355020/92
(71) Applicant: SUMITOMO RUBBER INDUSTRIES, CO. LTD, Chuo-ku Kobe-shi Hyogo-ken 651 (JP)
(72) Inventor: Tagashira, Kenji, Kobe-shi, Hyogo-ken (JP); Ueda, Yasunori, Osaka-shi, Osaka-fu (JP); Omoteda, Katsunori, Kobe-shi, Hyogo-ken (JP)
(74) Representative: Stewart, Charles Geoffrey

(57) **Abstract**

A pneumatic tyre which comprises a tread portion (22) provided with a circumferential groove (3) having a pair of side walls (5), each of the side walls (5) comprising a main portion (6) and a curved portion (7) extending between the main portion (6) and the tread surface (2), the curved portion (7) having a radius of curvature in the range of from 0.3 to 3 mm, whereby an increase in conicity force with the passage of time is prevented and tyre running noise is reduced.

## Description

The present invention relates to a pneumatic tyre having an improved tread groove capable of reducing an increase in conicity force with wear.

Recently, pneumatic tyres have been greatly improved in wear life, and service speed has increased. As a result, a change with the passage of time, i.e. wear, in tyre characteristics, e.g. conicity force has become a problem.

The conicity force is the force produced in a fixed axial direction during tyre rotation regardless of the rotational directions. If the conicity force is large, the car suffers from drifting to one side, and the running stability especially during high speed running may be greatly disturbed.

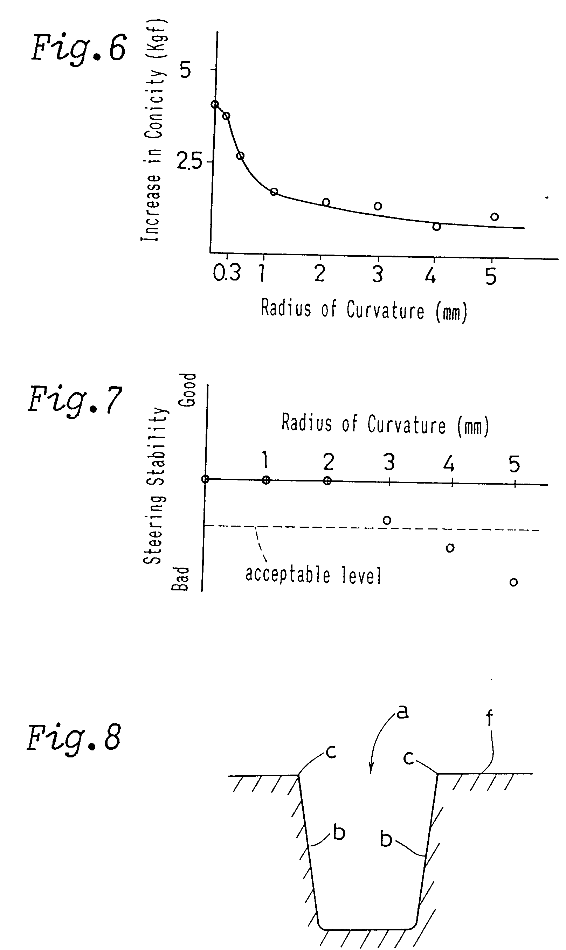

In a conventional tyre, which is provided with circumferential grooves (a) having a cross sectional shape such that as shown in Fig.8 the corners (c) between the side walls (b) and the tread face (f) are sharply angled or edged, the conicity force may become greater as the tyre wears.

It is therefore, an object of the present invention to provide a pneumatic tyre, in which an increase in the conicity force with wear is controlled, and undesirable drifting to one side can be effectively prevented.

According to one aspect of the present invention, a pneumatic tyre comprises a tread portion with a tread surface, the tread portion being provided with a circumferential groove extending continuously in the circumferential direction of the tyre, the circumferential groove having a pair of side walls, wherein each of the side walls comprises a main portion and a curved portion extending between the main portion and the tread surface, and the curved portion has a radius of curvature in the range of from 0.3 to 3 mm.

An embodiment of the present invention will now be described in detail in conjunction with the accompanying drawings, in which:
Fig.1 is a cross sectional view of a tyre according to the present invention showing the tyre internal structure;
Fig.2 is a developed plan view showing the tread pattern;
Fig.3 is a perspective view showing a crossing between a circumferential groove and an axial groove;
Fig.4 is a cross sectional view a circumferential groove showing the sectional shape;
Fig.5 is a cross sectional view of an axial groove showing the sectional shape;
Fig.6 is a graph showing conicity force change as a function of the radius of curvature (r1) of the corners between the circumferential groove and tread surface for tyres at the same degree of wear;
Fig.7 is a graph showing the relationship between steering stability and its radius of curvature (r1); and
Fig.8 is a cross sectional view of a conventional circumferential groove.
Figs.9 and 10 are graphs of the decrease in noise level against radius of curvature for tyres in which (a) only the axial grooves and (b) only the circumferential grooves respectively were curved.

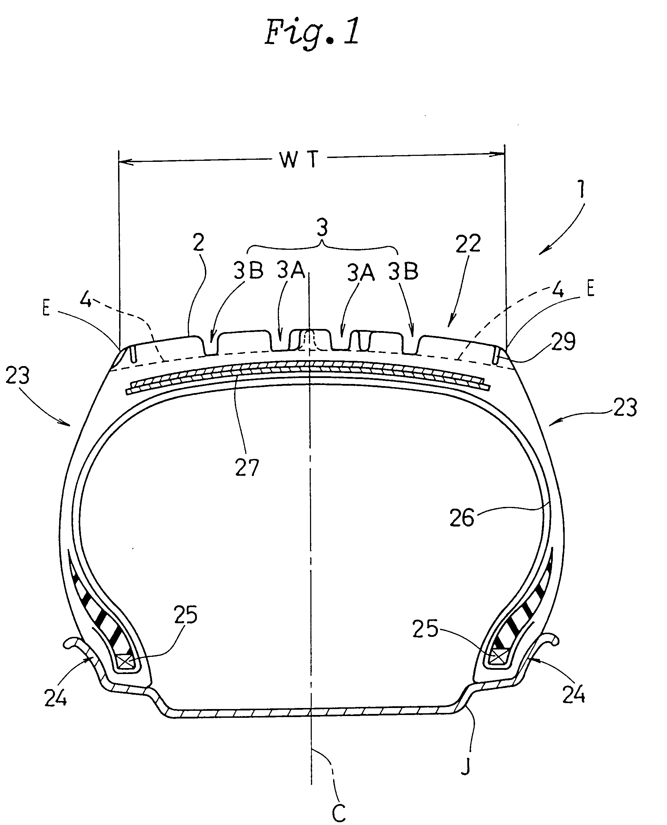

In Figs.1 to 5, the pneumatic tyre 1 is a low aspect ratio passenger radial tyre. The tyre 1 comprises a tread portion 22 with a tread surface 2, a pair of bead portions 24 each provided with a bead core 25 therein, a pair of sidewalls 23 extending one between each bead and the tread region, a carcass 26 extending between the bead portions 24 and turned up around the bead cores 25 from the axially inside to outside thereof, and a breaker belt 27 disposed radially outside the carcass 26 under the tread portion 22.

The carcass 26 comprises at least one ply, in this embodiment only one ply, of cords arranged radially at an angle of 70 to 90 degrees with respect to the tyre equator C to give a radial ply construction or a semiradial ply construction.

For the carcass cords, organic fibre cords, e.g. nylon, polyester, aromatic polyamide or the like are used.

The belt 27 comprises two plies of parallel cords arranged at an acute angle with respect to the tyre equator C.
For the belt cords, steel cords or organic fibre cords, e.g. nylon, polyester, aromatic polyamide or the like are used.

The tread portion 22 is provided on each side of the tyre equator C with at least one circumferentially extending groove 3. In this embodiment, two circumferential grooves 3: an axially inner circumferential groove 3A and an axially outer circumferential groove 3B are disposed on each side of the tread centreline. All the circumferential grooves 3A and 3B are straight grooves extending substantially parallel to the tyre equator C.

The circumferential grooves 3A and 3B are disposed within the ground contacting width which is the maximum axial width of the ground contacting region S under a normal loaded state where the tyre 1 is mounted on its regular rim J, inflated to its normal pressure and loaded with its normal load.

The tread portion 22 is further provided with a plurality of axial grooves 4. Each axial groove 4 extends from near the tyre equator C to the tread edge E, crossing the axially inner circumferential groove 3A and the axially outer circumferential groove 3B. Therefore, a centre rib extending continuously in the circumferential direction is formed between the axially inner circumferential grooves 3A and 3A, and a row of middle blocks BM between each of the axially inner circumferential grooves 3A and the adjacent axially outer circumferential groove 3B, and further a row of shoulder blocks BS between each of the axially outer circumferential grooves 3B and the adjacent tread edge E. Accordingly, a rib-block type tread pattern is formed.

The tread portion 22 is furthermore provided near the tread edges E with circumferentially extending slits or sipes 29. The slits 29 are disposed within the shoulder blocks BS, one in each block.

Therefore, a wet sideslip resistance is provided.

The above-mentioned circumferential grooves 3 each have a pair of side walls 5 and a groove bottom 9. The corner between each side wall 5 and the tread surface 2 and the corner between each side wall 5 and the groove bottom 9 are rounded.

In a cross section including the tyre axis, each side wall 5 has a profile comprising a main portion 6, a radially outer curved portion 7 extending between the main portion 6 and the tread surface 2, and a radially inner curved portion 8 extending between the main portion 6 and the groove bottom 9. Preferably, the main portion 6 is straight and inclined at an angle of 2 to 15 degrees with respect to the normal direction to the tread surface 2 so that the groove width increases axially outwards. Between the radially outer curved portion 7, the main portion 6 and the tread surface 2, and between the radially inner curved portion 8, the main portion 6 and the groove bottom 9, the profile is smoothly continued so as not to form an angled corner.

The radially outer curved portion 7 has a single radius of curvature (r1l) of 0.3 to 3 mm. The curved portion 7 is formed along the whole circumferential length of the side walls 5.

Each of the axially inner and outer circumferential grooves 3A and 3B has a groove width WH in the range of from 0.06 to 0.16 times the tread width WT between the tread edges E, and a groove depth WD in the range of from 0.08 to 0.18 times the tread width WT.

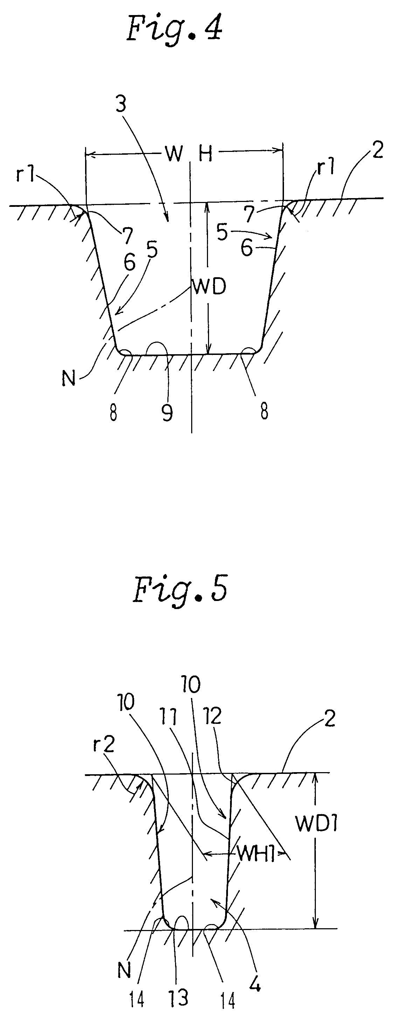

As shown in Fig.4, in cross section of the groove, the groove width WH is defined the a distance between the two intersections of extended lines of the main portions 6 with the tread surface 2 (imaginary line). The dimensions are measured under the normally inflated but unloaded condition.

Fig.6 shows the result of a test for conicity force change with the passage of time, i.e tyre wear showing increase of conicity for various radii (r1) at the same tyre wear stage. The test was carried out on a 2000cc FF car running on a 50/50% expressway/highway route over 1000Kms with the tyres mounted on the front wheels.

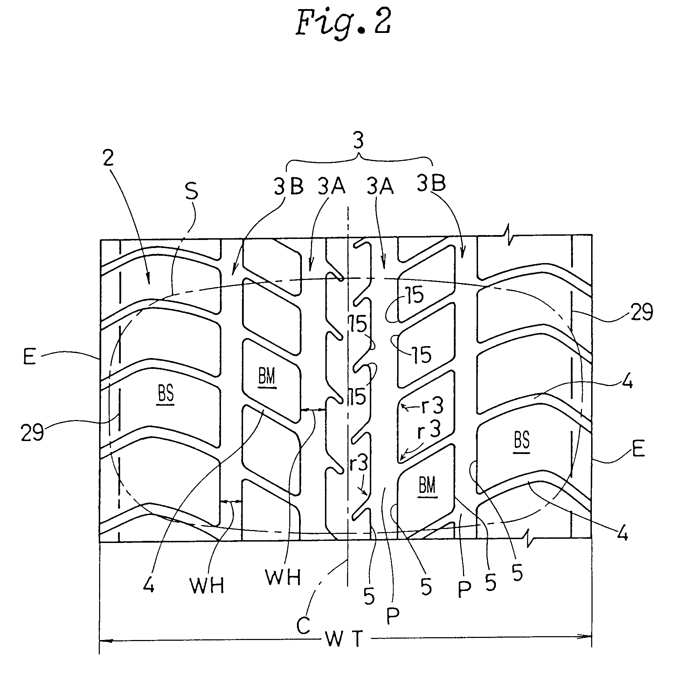

Test tyres of size 225/50R16 having an identical tread pattern similar to Fig.2 were prepared by changing the radius of curvature of the corners between the side walls of all the circumferential grooves and the tread face, then the test tyres were run for a predetermined distance under the same condition to obtain the difference between the conicity force before and after the running. The conicity was measured using the JASO C-607 test procedure for Automobile Tyre Uniformity.

From the test result, it was confirmed that the conicity force changes with the wear as the radius of curvature is increased.

Further, it was discovered that the radius of curvature should be at least 0.3 mm preferably 1 mm for an effective decrease in change.

Fig.7 shows the result of another test for steering stability. Using the same test tyres, their steering stability was evaluated by a test driver in the new tyre condition.

From the test, it was discovered that the steering stability is greatly disturbed if the radius of curvature exceeds 3 mm. Accordingly, the radius of curvature should be at most 3 mm preferably 2 mm.

Therefore, the radius of curvature (r1) of the radially outer curved portion 7 is set in the range of from 0.3 to 3 mm, preferably 1 to 2 mm.

Further, it was discovered that tyre noise can be effectively reduced by providing such a curved portion 7.

If the corner is angled as in a conventional tyre, it is easily movable, and when the corner is pressed against small objects on the roads, roughness of the roads and the like during running, the corner is vibrated. This vibration is transmitted to the tyre body and the air in the grooves to increase tyre running noise.

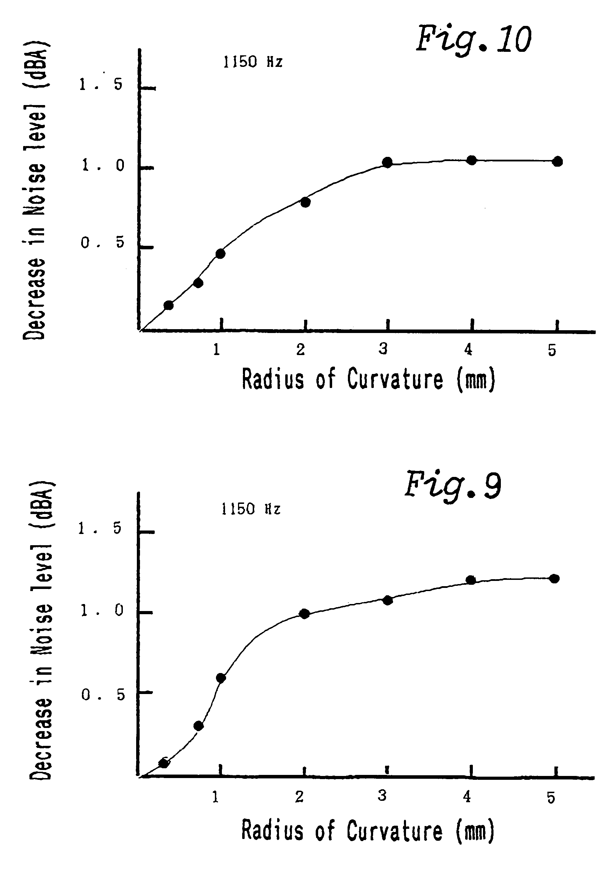

Two graphs showing noise test results were prepared, see Figs.9 and 10. In Fig.9 only the axial grooves were rounds, and in Fig.10 only the circumferential grooves were rounded. The test tread pattern was as Fig.2. 1150Hz is the frequency at which the maximum peak lay in the frequency spectrum. The method for measuring the noise was JASO C-606 (Test Procedure for Tyre Noise).

Incidentally, noise concerned with air includes air resonance noise made by resonance of the air in a circumferential groove in the ground contacting patch, and air pumping noise made by high speed air flow from a circumferential groove to the axial grooves.

For decreasing the conicity force change, it is not always necessary to provide a curved portion in the axial grooves 4. However, in order to reduce running noise, all the axial grooves 4 in this embodiment are provided with a curved portion similarly to the circumferential groove 3.

Each axial groove 4 has a pair of side walls 10 and a groove bottom 13, and the corner between each side wall 10 and the tread face 2 and the corner between each side wall 10 and the groove bottom 13 are rounded as shown in Fig.5.

In a section at a right angle to the tyre axis, that is, parallel to the tyre equatorial plane, each of the side walls 10 has a profile comprising a main portion 11, a radially outer curved portion 12 extending between the main portion 11 and the tread surface 2, and a radially inner curved portion 14 extending between the main portion 11 and the groove bottom 13.

The main portion 11 is flat, and preferably inclined at a smaller angle than that of the circumferential groove 3, or substantially normal to the tread surface 2.

Between the radially outer curved portion 12, the main portion 11 and the tread surface 2, and between the radially inner curved portion 14, the main portion 11 and the groove bottom 13, the profile is smoothly continued without forming an angled corner.

The radially outer curved portion 12 has a single radius of curvature (r2) of 0.3 to 3 mm. If the radius of curvature (r2) is less than 0.3 mm, the noise can not be reduced. If the radius of curvature (r2) is more than 3 mm, traction and braking performance i.e. road grip performance are deteriorated.

The curved portion 12 is preferably formed along the whole length of the side walls 10 of all the axial grooves 4.

The axial grooves 4 have a groove width WH1 which is smaller than that of the circumferential groove 3, and a groove depth WD1 which is substantially the same as the groove depth WD of the circumferential groove 3.

As shown in Fig.5, in a cross section of the axial groove, the groove width WH1 is defined as the distance between the two intersections of extended lines of the main portions 11 with the tread surface 2 (imaginary line). The dimensions are measured under the normally inflated but unloaded condition.

By providing such curved portions 12, the air in the groove is not excited and the air resonance noise is reduced.

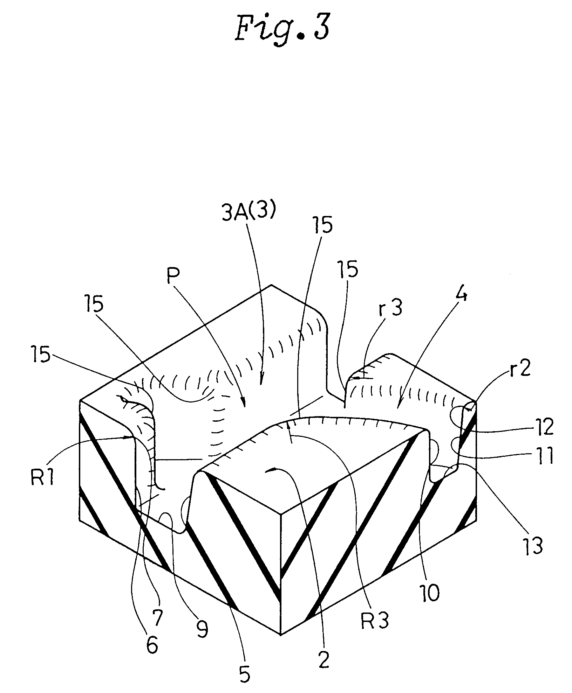

In this embodiment, furthermore, for the same reason, that is, to reduce air resonance noise and the air pumping noise, the corners 15 formed between the side walls 5 of the circumferential grooves 3 and the side walls 10 of the axial grooves 4 are rounded along the whole length thereof from the groove bottom to the tread surface 2 by a circular arc which is smoothly continued to the side walls 5 and 10 without forming an angled corner, as shown in Fig.3.

In the plane parallel with the tread surface, the radius of curvature (r3) of the circular arc is preferably in the range of from 1.5 to 5 mm when the angle formed between the side wall 5 and the side wall 10 is less than 90 degrees, but when 90 degrees or more, in the range of from 2 to 5 mm. Therefore, vibration of the corners 15 is prevented to reduce air resonance noise, and further air flow in the crossing P is improved to prevent the occurrence of vortexes and thus to reduce the air pumping noise. Accordingly, noise is further effectively reduced.

By providing such curved portions for all the circumferential grooves, axial grooves and crossings therebetween, the noise is reduced 0.5 to 1.0 dB without deteriorating other tyre performance factors.

As described above, in the pneumatic tyre according to the present invention, the side walls of the circumferential grooves are provided with the curved portions having a radius of curvature in the range of from 0.3 to 3 mm. As a result, increase in the conicity force with wear is greatly reduced, and increase in drifting to one side of the car with wear is effectively prevented. Further, tyre noise, especially air resonance noise is reduced.

The present invention can be applied to various tread patterns comprising a circumferential groove, for example, a rib pattern formed by circumferential grooves only (no axial grooves), a block pattern consisting of blocks only (no circumferentially continuous rib) and the like, in addition to the above-mentioned rib-block pattern.

## Claims

1. A pneumatic tyre comprising a tread portion (22) with a tread surface (2), said tread portion (22) being provided with a circumferential groove (3) extending continuously in the circumferential direction of the tyre, said circumferential groove (3) having a pair of side walls (5) characterised in that each said side wall (5) comprises a main portion (6) and a curved portion (7) extending between the main portion (6) and the tread surface (2), said curved portion (7) having a radius of curvature (r1) in the range of from 0.3 to 3 mm.

2. A pneumatic tyre according to claim 1, characterised in that said curved portion (7) is continued smoothly to the tread surface (2) without forming an angled corner therebetween.

3. A pneumatic tyre according to claim 1 or 2, characterised in that said tread portion (2) is provided with axial grooves (4) crossing the circumferential groove (3), each said axial groove (4) having a pair of side walls (10) each comprising a main portion (11) and a curved portion (12) extending between the main portion (11) and the tread surface (2), and said curved portion (12) of the axial groove (4) has a radius of curvature (r2) in the range of from 0.3 to 3 mm.

4. A pneumatic tyre according to claim 3, characterised in that said curved portion (12) of the axial groove is continued smoothly to the tread surface (2) without forming an angled corner therebetween.

5. A pneumatic tyre according to claim 3, characterised in that corners (r5) which are formed between said pair of side walls (5) of the circumferential groove (3) and said pair of side walls (11) of each said axial groove (4) are rounded by an arc.

6. A pneumatic tyre according to claim 5, characterised in that said arc is continued smoothly to the adjacent side walls without forming an angled corner therebetween.
